# EUROPEAN PATENT APPLICATION

(11) **EP 1 232 713 A1**
(43) Date of publication of application: **21.08.2002**
(21) Application number: 02075650.8
(22) Date of filing: 18.02.2002
(51) Int. Cl.: A47J 47/01

(54) **Onion dispenser**

(30) Priority: 12.10.2001 NL 1019166; 16.02.2001 NL 1017387
(71) Applicant: Peter B.V., 4671 PC Dinteloord (NL)
(72) Inventor: Stroeks, Olivier Frederik Adriaan Rudolf, 4611 WP Bergen op Zoom (NL); Rijnberg, Pieter Willem, 4671 PC DInteloord (NL)
(74) Representative: Eveleens Maarse, Pieter

(57) **Abstract**

The invention relates to a device for dispensing loose material in portions, comprising:
- a holder (16);
- a supply container (1) for placing in the holder (16);
- a dispensing element (5) present on the underside of the supply container (1);
- operating means (20,21) connected to the holder (16) for operating the dispensing element (5), wherein the dispensing element (5) is incorporated in the supply container (1) and the dispensing element (5) is movable inside the supply container (1).

The plastic part of the supply container (1) herein becomes unnecessary, so that the supply container can be manufactured at a lower cost-price.

According to a first preferred embodiment the supply container (1), the dispensing element (5) and the holder (16) are dimensioned so that the loose material (2) only comes into contact with the supply container (1) and the dispensing element (5) during dispensing of the loose material (2).

## Description

The invention relates to a device for dispensing loose material in portions, for instance instant coffee or chopped vegetables, comprising:
- a holder;
- a supply container for placing in the holder;
- a dispensing element present on the underside of the supply container;
- operating means connected to the holder for operating the dispensing element.

Such a device is generally known, for instance as dispensing device in a coffee machine.

A special accessory is always necessary here which is added as separate element to the actual supply container. This accessory is usually manufactured from plastic and has a considerable cost-increasing effect.

The object of the invention is to provide such a device wherein the supply container can be manufactured at a lower cost-price.

This objective is achieved by a device wherein the dispensing element is incorporated in the supply container and the dispensing element is movable inside the supply container.

The plastic part of the supply container herein becomes unnecessary, so that the supply container can be manufactured at a lower cost-price.

According to a first preferred embodiment the supply container, the dispensing element and the holder are dimensioned so that the loose material only comes into contact with the supply container and the dispensing element during dispensing of the loose material.

This has the advantage that the loose material does not come into contact with parts of the holder. In this latter case the parts in question, for instance after placing of a new supply container, would have to be cleaned so as to ensure hygiene. In the device according to this preferred embodiment this is not per se necessary; cleaning need only take place to increase general hygiene.

This embodiment becomes particularly attractive when the dispensing element is incorporated in the supply container.

The construction is greatly simplified here when the dispensing element is formed by an element movable in substantially horizontal direction in the holder.

The cost of such a dispensing element is hereby kept low; it does after all form part of the supply container in which the loose material is supplied, and this supply container is discarded when empty.

According to a specific preferred embodiment the dispensing element is provided with coupling means which can be operated by means of at least one lever connected to the holder. This construction provides the option of providing the holder with an ergonomically correctly placed lever with which the dispensing element can be operated.

There is a field of application with chopped onions in the catering sector, particularly in so-called fast-food restaurants and in snack-bars. Chopped onions are for instance used to garnish hamburgers and snacks such as minced meat hot dogs. In the former case use is generally made of onion rings and in the latter case use is generally made of onion chopped into small blocks.

In the current situation the chopped onion, when prepacked, is supplied in plastic bags. These plastic bags are emptied into a dish and, when snacks are garnished, the chopped onion is applied to the snack with a spoon. When onion rings are used, this is rather awkward; the fingers are often used for this purpose.

This is a generally less desirable situation from the viewpoint of hygiene.

The object of a specific embodiment of the present invention is to provide a holder with which the chopped onion can be dispensed, both in the case of onion blocks and onion rings, without the onion coming into contact with the fingers or with auxiliary tools such as spoons.

This object is achieved by a device for dispensing chopped onion in portions, comprising a holder, a supply container for placing in the holder, a dispensing element present on the underside of the supply container and operating means connected to the holder for operating the dispensing element.

Using such a device it is possible to dispense the chopped onion without it being touched by the fingers or with tools such as spoons.

In this device the chopped onions are supplied in a supply container. This supply container is opened and placed in the holder. The dispensing operation can then take place.

According to a specific preferred embodiment the holder is provided with at least one handgrip, wherein the handgrip is placed so that the at least one lever can be operated while the handle is being held.

According to yet another preferred embodiment the holder is placed removably on a support and the at least one lever can be operated with the holder on the support as well as with the holder off the support.

Other attractive preferred embodiments are stated in the remaining sub-claims.

The present invention will be elucidated hereinbelow with reference to the annexed drawings, in which:
figure 1 shows a partly broken-away, schematic, exploded view of a supply container according to the present invention;
figure 2 is a perspective schematic view of a holder according to the present invention in which a supply container is placed; and
figure 3 is a perspective schematic view of a support for the holder according to the present invention;
figure 4 is a perspective schematic view of a further embodiment of a device according to the present invention;
figure 5 is a detail view of the device shown in figure 4 provided with a cooling element;
figure 6 is a detail view of the device shown in figure 4 with operating means as seen from a first position;
figure 7 is a detail view of the device shown in figure 4 with operating means as seen from a second position;
figures 8a-c show schematic views of the operating means of figures 6 and 7 in three different respective positions;
figures 91-c show top views of the positions of figures 8a-c.

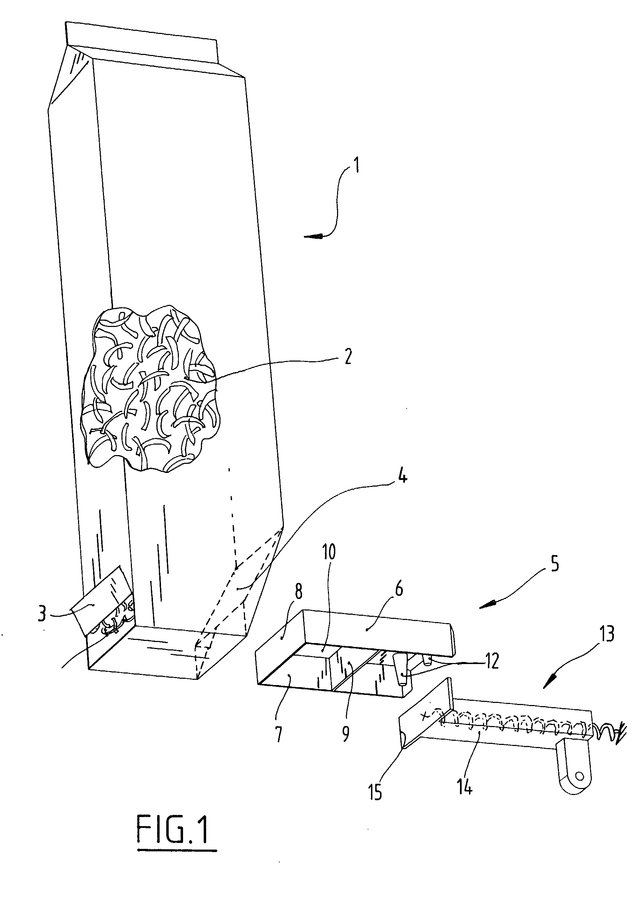

Figure 1 shows a supply container 1 which has the configuration of a pack for packaging milk and other non-carbonated drinks. Such a pack is usually manufactured from a laminate of cardboard and a plastic foil.

The pack has the configuration of a block and is closed at its top by a prismatic closure. On its underside the supply container is provided with an inclining wall which leads to the dispensing element.

Supply container 1 is filled with onion rings 2. It is also possible instead to fill supply container 1 with small chopped onion blocks.

Supply container 1 is provided on its underside with an intermediate opening 3 in which a dispensing element 5 is movable.

Dispensing element 5 is preferably manufactured from plastic. The dispensing element 5 formed by two side walls 6, 7 connected by a front wall 8 and a middle wall 9. Walls 6, 7, 8, 9 enclose an opening 10. Arranged connecting onto middle wall 9 and side walls 6, 7 is an upper wall 11 which extends in substantially horizontal direction. Two protrusions 12 extend downward from upper wall 11. These are intended to be engaged by a coupling element designated in its entirety with 13.

The coupling element is formed by a lever 14 provided on its forward side with an engaging wall 15. The whole dispensing element 5 can be moved back and forth by moving the lever 14 reciprocally. Dimensioning is herein such that dispensing element 5 is movable between a first position, in which the opening 10 is situated wholly inside supply container 1, and a second position in which said opening 10 is situated at least partially outside supply container 1. A reproducible quantity of chopped union is dispensed by performing this movement.

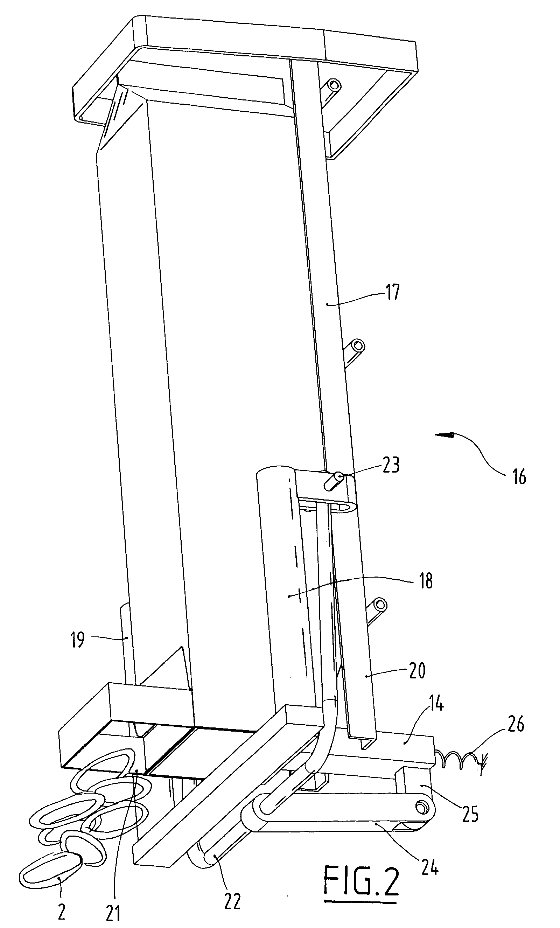

Figure 2 shows how supply container 1 is placed in a holder designated as a whole with 16. Holder 16 is manufactured from stainless steel and is formed by a frame 17 provided with two handgrips 18, 19. Using these handgrips it is possible to carry the unit of holder and supply container above the desired location where union rings 2 have to be dispensed, for instance hamburger buns cut in half.

For operation of the dispensing element an operating lever 20, 21 is arranged parallel to each of the handgrips 18, 19. The two operating levers 20, 21 are combined to form a U-shaped bracket 22. The two operating levers 20, 21 are rotatably connected at the top by means of a shaft 23 to the top part of handgrips 18, 19 respectively. Bracket 22 is connected by means of a rod 24 to a protrusion 25 of lever 14.

It is thus possible by moving operating levers 20, 21 reciprocally to slide dispensing element 5 back and forth, wherein at each reciprocal movement a measured quantity of onion rings 2 is dispensed. Use is herein made of a draw spring 26 which urges dispensing element 5 to its rest position.

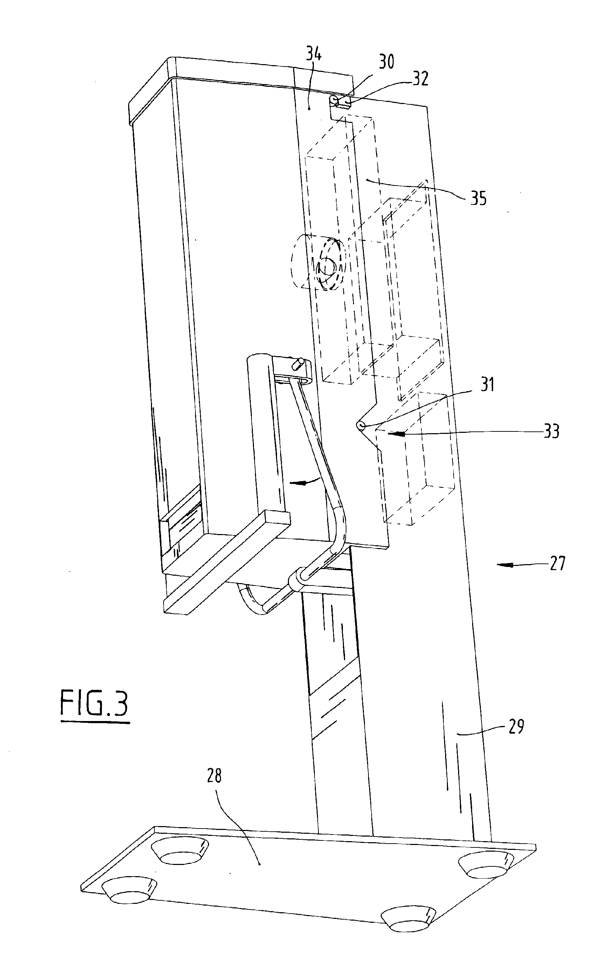

In some situations it is more attractive to leave supply container 1 and holder 16 in place and to move the dish onto which the chopped onion must be dispensed under the dispensing element. The invention provides for this purpose a support 27 as shown in figure 3. Support 27 is formed by a base plate 28 on which is arranged a column 29. Although it is possible to apply different fixing methods to fix the holder 16 to column 27, the embodiment shown in figure 3 uses transverse pins 30, 31 which are fastened to the column 29.

Holder 16 is provided on its top side with a hook-like element 32 and on its underside with a notch 33. Both hook 32 and recess 33 are otherwise arranged in a substantially U-shaped profile 34 which forms part of holder 16, but which for the sake of clarity is omitted from figure 2.

Another aspect of this configuration relates to holding the holder 16 in place when it is not in use. Such a situation occurs when holder 16 is only used for dispensing when it is detached. During dispensing it is gripped on handgrips 18, 19 and after use it is replaced on support 27.

In order to keep the chopped union fresh and prevent bacterial growth, holder 16 can be provided with cooling elements. It is however also possible, as shown in figure 3, to arrange cooling elements in the support. Since the holder will be placed in the support a great deal of the time, even when it is used as detached unit, such cooling elements can work effectively. It is however essential for this purpose that there is an effective thermal coupling between the cooling elements and the content of the supply container. This can for instance be achieved by placing the cooling elements in the support so that they connect directly onto the supply container.

It will be apparent that instead of cooling elements which must be placed in the freezer from time to time, use can be made of another type of cooling device, for instance an evaporator forming part of a classical cooling device.

It is also possible to make use of a cooling device which is for instance already incorporated in a preparation table. Such a cooling table is usual in the preparation of for instance hamburgers. A hollow can be recessed into such a preparation table for receiving the dispensing device. This is then cooled by the integral cooling device of the preparation table.

The position of the handgrips and levers will - assuming the above known embodiment - be adapted to enable engaging and operating of the dispensing device on the top side.

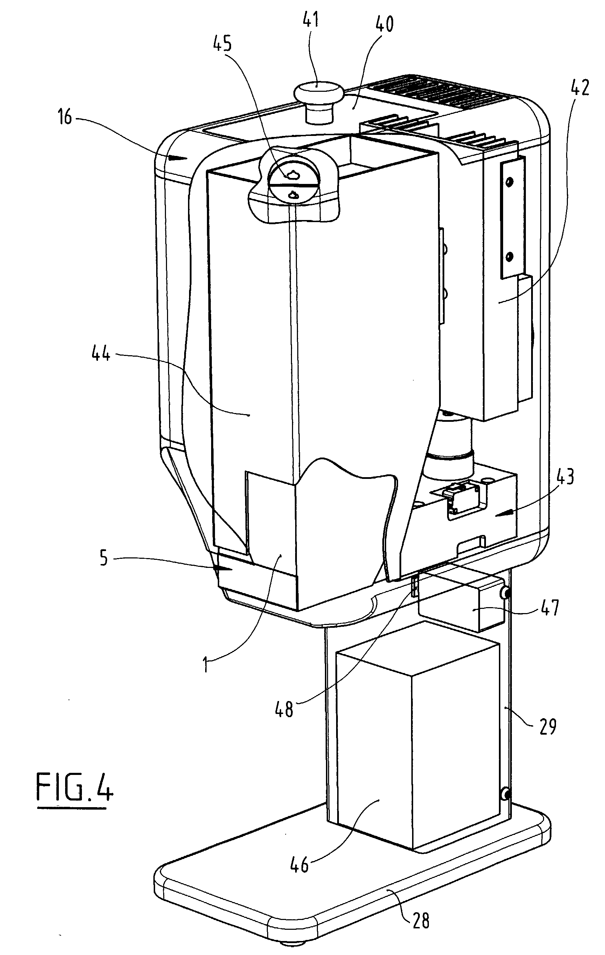

Figures 4-9 show a further embodiment of a device for dispensing loose material in portions, such as grated cheese, chopped vegetables or instant coffee. In this embodiment the holder 16 forms a housing for supply container 1, which housing 16 is supported by a column 29 on a base plate 28. On the top the housing 16 is provided with a cover plate 40 with handle 41 with which cover 40 can be raised to gain access to the space in housing 16. The supply container 1 with loose material is placed in housing 16. Further provided at the rear in housing 16 are a cooler 42 and operating means 43 for operating the dispensing element 5 placed under supply container 1. Also placed in housing 16 around supply container 1 is a cooling housing 44 which in co-action with cooler 42 provides cooling of the content of supply container 1. At the top of housing 16 is placed a control button 45 which consists of two touch controls: one for dispensing a small portion and one for dispensing a large portion of loose material. Space is provided in column 29 for a power supply unit 46, an on-off switch 47 and a reset button 48.

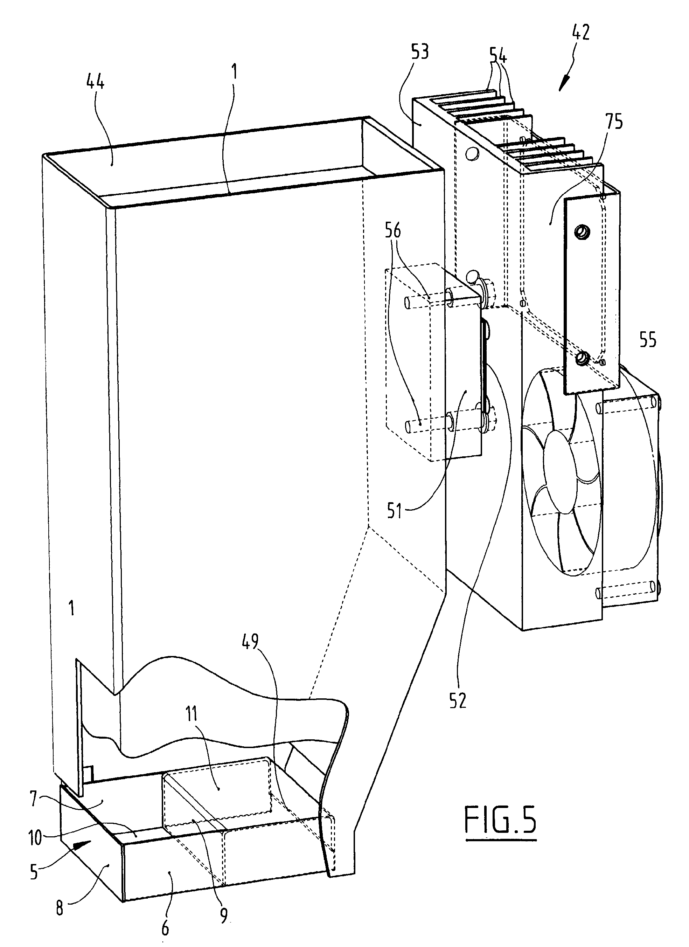

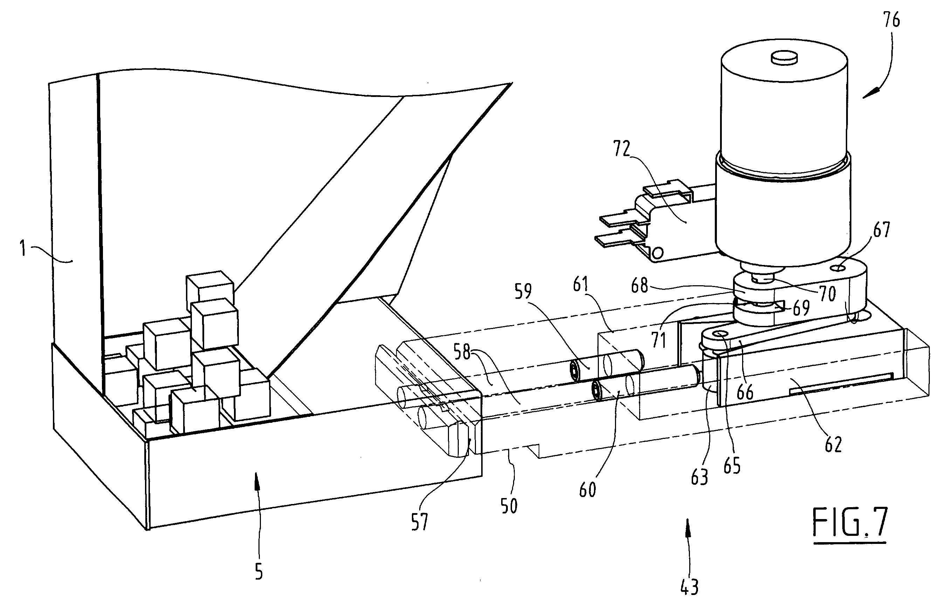

With reference to figure 5 it is noted that use is made of practically the same dispensing element 5 as that shown in figure 1. A difference is that between side walls 6, 7 there is provided a rear wall 49 which is intended for engaging by a coupling element 50, which is shown in figures 7-9 and which forms part of operating means 43.

Returning now to cooler 42, as shown in more detail in figure 5, it can be seen that cooling housing 44 is in contact with a thin-walled cooling element 52 via a heat transfer block 51. A voltage is applied to this cooling element 52, whereby heat is extracted on the front side which is discharged on the rear side via a cooling plate 53 provided with cooling fins 54 and mechanical fan 55. Cooling plate 53 is fixed to heat transfer block 51 using bolts 56, which are provided with a nylon sleeve to prevent thermal short-circuit. An electronic control unit 75 is further provided to control the operating means 43 subject to the desired measured quantity inputted into the device by means of control button 45 (see figure 4).

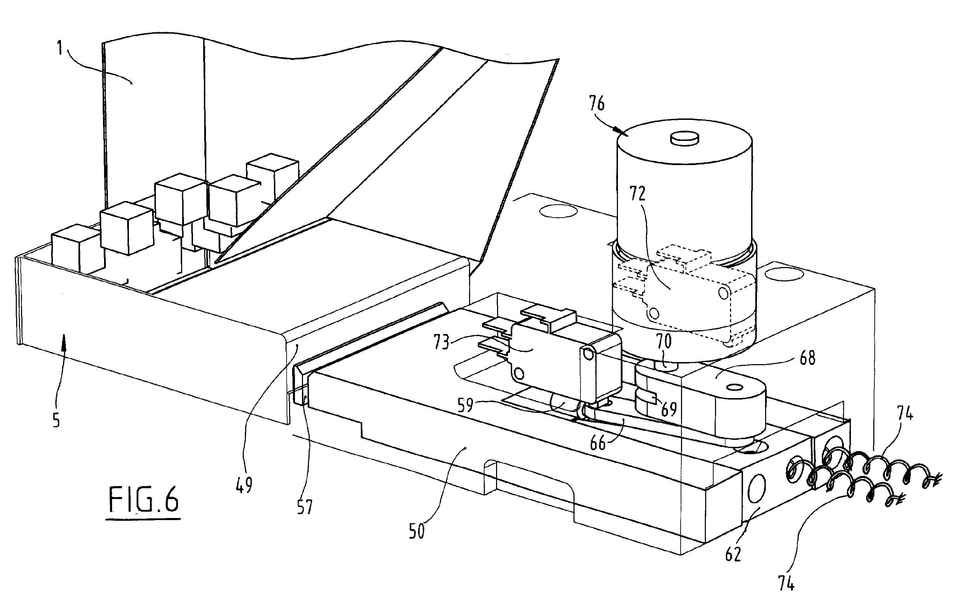

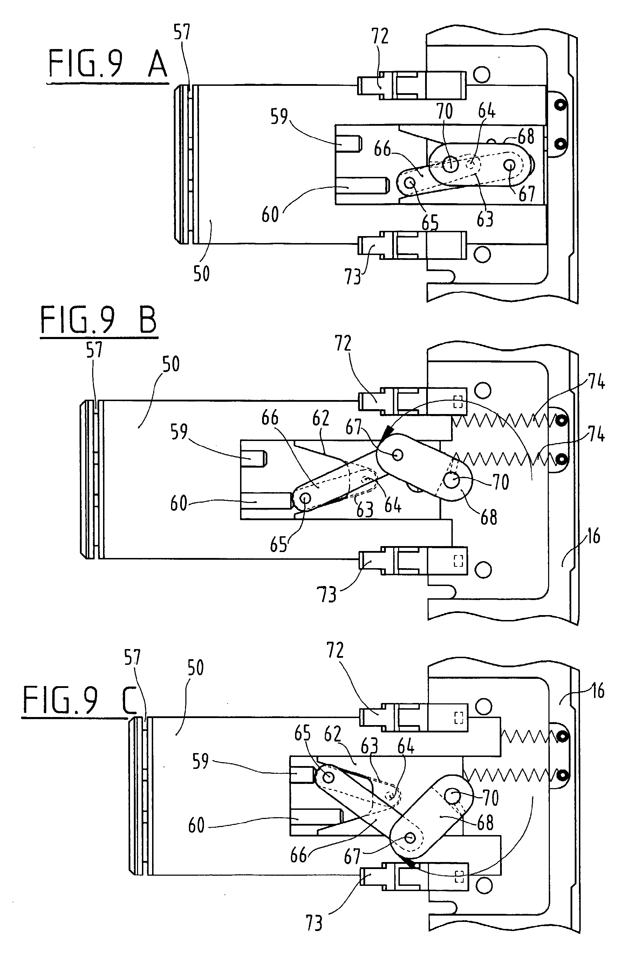

The details of operating means 43 will be considered with reference to the two detail views of these operating means shown from different positions in figures 6 and 7. On the left-hand side of these figures 6 and 7 can still be seen a part of supply container 1 with loose material, for instance in the form of onion blocks. Located directly thereunder is dispensing element 5, the rear wall 49 of which drops into a gap 57 provided in coupling element 50. From the side of coupling element 50 in which gap 57 is arranged there are provided in coupling element 50 two bores 58 for receiving adjusting screws 59, 60. Adjusting screws 59, 60 can be adjusted via bores 58 to set the desired measured quantity. As drawn in figure 7, adjusting screw 59 is intended for a small measured quantity and adjusting screw 60 is intended for a large measured quantity of loose material. Coupling element 50 is further provided with a recess 61 in which a beak-shaped block 62 is arranged for free displacement. A first pivot block 63 is arranged rotatably between the jaws of beak-shaped block 62. The rotation axis is shown most clearly in figures 9a-c, designated with the reference numeral 64. A lever 66 is arranged by means of pivot pin 65 above the first pivot block 63. A second pivot block 68 is arranged on top of lever 66 by means of pivot pin 67. The second pivot block 68 is provided at one end with a channel 69. Close to this channel 69 a rotation shaft 70 extends freely through a part of second pivot block 68 into channel 69, wherein a transverse shaft 71 coupled to rotation shaft 70 moves in channel 69.

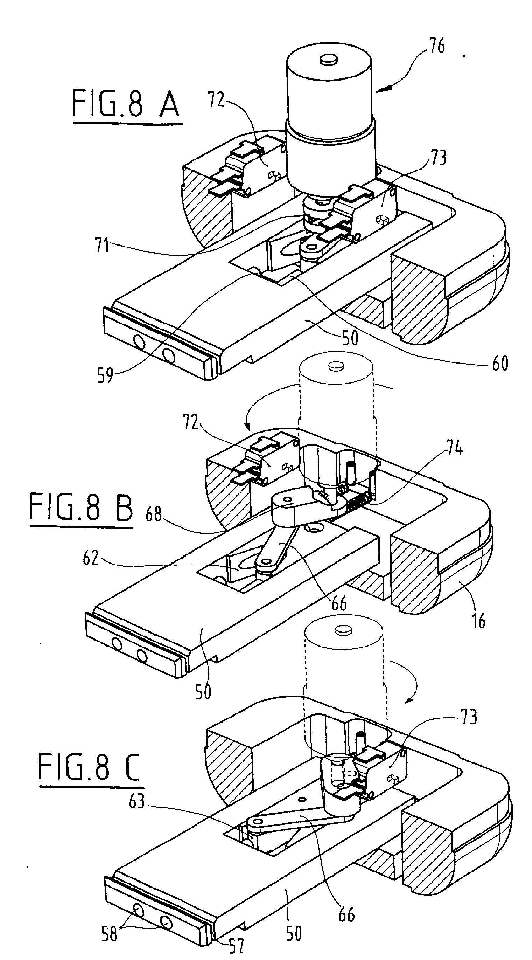

Rotation shaft 70 is the output shaft of a motor with gearbox 76. Transverse shaft 71 forms a coupling between the gearbox driven by the motor and the second pivot block 68 for the purpose of driving the operating means 43. Switches 72, 73 are further provided on the left and right adjacently of the second pivot block 68. Beak-shaped block 62 and coupling element 50 are fixed under bias to holder 16 at the rear by means of draw springs 74. The operation of this automated dispensing device will be explained with reference to figures 8a-c and figures 9a-c. The neutral position is shown in figures 8a and 9a. Figures 8b and 9b show a position during the cycle for dispensing a large measured quantity. Finally, figures 8c and 9c show a position during the cycle for dispensing a small measured quantity. A cycle begins in the neutral position once the control button 45 is operated. Depending on whether the small or large dispensing button is pressed, the motor 76 is driven to the left or right by the electronic control unit 75. Via the rotation shaft 70 and transverse shaft 71 in channel 69 of second pivot block 68, this second pivot block 68 is driven in rotation around shaft 70. Via pivot point 67, lever 66 and pivot point 65 the first pivot block 63, which can rotate around rotation point 64 between the jaws of beak-shaped block 62, is urged to the left (figures 8b and 9b) or to the right (figures 8c and 9c). During rotation of second pivot block 68 the beak-shaped block 62 is displaced in coupling element 50 until first pivot block 63 contacts adjusting screw 60 or 59 respectively on the left or right, whereafter beak-shaped block 62 is pushed forward together with coupling element 50. The pushing forward of coupling element 50 is brought about by the pressure which first pivot block 63 exerts on adjusting screw 60 respectively 59. The long adjusting screw 60 results in a long stroke of coupling element 50, and therefore a large dispensed quantity, while the short adjusting screw 59 results in a short stroke and therefore a small dispensed quantity of loose material. The pushing forward of coupling element 50 stops when second pivot block 68 passes through the dead centre, i.e. is rotated more than 180° relative to the position shown in figures 8a and 9a, and herein contacts switch 73 or 72. The electronic control unit 75 then ensures that motor 71 is stopped with a time lag after operating switch 73 or 72. As soon as motor 71 is stopped the draw springs 74 provide for a rapid return of coupling element 50 and beak-shaped block 62.

## Claims

1. Device for dispensing loose material in portions, comprising:
- a holder;
- a supply container for placing in the holder;
- a dispensing element present on the underside of the supply container;
- operating means connected to the holder for operating the dispensing element, **characterized in that** the dispensing element is incorporated in the supply container and that the dispensing element is movable inside the supply container.

2. Device as claimed in claim 1, **characterized in that** the supply container, the dispensing element and the holder are dimensioned so that the loose material only comes into contact with the supply container and the dispensing element during dispensing of the loose material.

3. Device as claimed in claim 2, **characterized in that** the dispensing element is an element movable in substantially horizontal direction in the holder.

4. Device as claimed in claim 1, 2 or 3, **characterized in that** the dispensing element is manufactured from plastic and that the supply container is manufactured from a cardboard laminate.

5. Device as claimed in claim 4, **characterized in that** the supply container has the structure of a package for liquids manufactured from cardboard laminate.

6. Device as claimed in any of the foregoing claims, **characterized in that** the dispensing element is provided with coupling means which can be operated by means of at least one lever connected to the holder.

7. Device as claimed in any of the foregoing claims, **characterized in that** the device is dimensioned for dispensing slightly moist material such as chopped vegetables.

8. Device as claimed in claim 7, **characterized in that** the device is dimensioned for dispensing pieces of chopped onion.

9. Device as claimed in claim 8, **characterized in that** the holder is provided with at least one handgrip, wherein the handgrip is placed so that during holding of the handgrip the at least one lever can be operated.

10. Device as claimed in claim 9, **characterized in that** the holder comprises two handgrips and that at least one of the at least two levers extends substantially parallel to one of the handgrips and at a short distance therefrom.

11. Device as claimed in any of the foregoing claims, **characterized in that** the holder is placed removably on a support and the at least one lever can be operated with the holder on the support as well as with the holder off the support.

12. Device as claimed in claim 11, **characterized in that** the support is provided with cooling means for cooling the content of the supply container.

13. Device as claimed in claim 12, **characterized in that** the support is provided with separate storage cooling elements for placing in a freezer.

14. Device as claimed in claim 12, **characterized in that** the support is incorporated in a preparation table.

15. Device as claimed in any of the foregoing claims, **characterized in that** the operating means are driven electrically.

16. Device as claimed in claim 15, **characterized in that** the operating means comprise a pivoting lever construction for sliding a coupling element which engages on the dispensing element.

17. Device as claimed in claim 16, **characterized in that** the stroke of the sliding movement of the coupling element is adjustable subject to the desired portion size.

18. Device as claimed in any of the claims 15-17, **characterized in that** the coupling element is connected to the holder by means of a draw spring.
